# FASCICULE DE BREVET EUROPEEN

(11) **EP 0 527 682 B1**
(45) Date de publication et mention de la délivrance du brevet: **21.10.1998**
(21) Numéro de dépôt: 92402270.0
(22) Date de dépôt: 12.08.1992
(51) Int. Cl.: B32B 17/10, C03C 27/12

(54) **Vitrage feuilleté de sécurité pour avion**
Sicherheitsverbandscheibe für Flugzeuge
Laminated safety glass for plane

(30) Priorité: 14.08.1991 FR 9110351
(43) Date de publication de la demande: 17.02.1993
(73) Titulaire: SAINT-GOBAIN VITRAGE, 92400 Courbevoie (FR)
(72) Inventeur: Chaussade, Pierre, F-45600 Sully sur Loire (FR); Heutte, Catherine, F-45600 Sully sur Loire (FR)
(74) Mandataire: Muller, René

(56) Documents cités:
- EP-A- 190 517
- EP-A- 229 326
- EP-A- 418 123
- FR-A- 2 153 037
- FR-A- 2 409 857

## Description

La présente invention concerne un vitrage de sécurité pour avion, notamment un pare-brise ou un vitrage latéral de cockpit (cabine de pilotage) pressurisé.

Les vitrages feuilletés en verre pour avion sont constitués de plusieurs feuilles de verre (plis), généralement deux ou trois, et d'intercalaires thermoplastiques en polyvinylbutyral plastifié (PVB) et/ou en polyuréthane. Ces vitrages sont conçus pour maintenir la pressurisation à l'intérieur de l'avion en cas de casse accidentelle pour une raison ou une autre d'un des plis de verre.

Lorsque le pli en question est celui orienté du côté intérieur à la cabine, la fracture ou fissuration du verre peut se propager sur toute l'étendue du vitrage suivant des formes de propagation fonction du type de renforcement du verre. Ce renforcement peut être une trempe thermique ou une trempe chimique ou un recuit.

Lorsque le verre est trempé thermiquement, généralement sa fragmentation ne génère pas d'éclats ou de fragments libres au départ et le long de la fracture.

En revanche, lorsque le verre est trempé chimiquement ou lorsqu'il est recuit, la fragmentation peut générer des petits éclats, aiguilles ou esquilles le long des lignes de fracture.

Lorsque la fracture du verre orienté vers l'intérieur de la cabine se produit en altitude, notamment sous l'effet de contraintes thermiques, la pression interne présente dans la cabine maintient le vitrage en compression et les éclats sur la face du vitrage. Mais, lorsque l'avion perd de l'altitude, le nouvel équilibre des pressions auxquelles est soumis le vitrage peut entraîner une ouverture des fractures et éventuellement la libération des éclats.

Il est connu du brevet BE-856 398 un vitrage plus particulièrement destiné à équiper des véhicules, qui comporte une feuille en matière plastique dont une des faces est propre à adhérer à une feuille de verre, cependant que l'autre face comprend une matière thermodurcie conférant au vitrage des propriétés d'antilacération et d'autocicatrisation.

Il est également connu du brevet EP-0 418 123 des vitrages pour l'automobile du type vitrage latéral coulissant, vitrage feuilleté dont la feuille intercalaire à base de polymère est adaptée pour conférer au vitrage des propriétés de résistance à l'effraction et d'affaiblissement acoustique.

Il est enfin connu du brevet EP-0 269 469 des vitrages à qui l'on confère des propriétés anti-buée par un revêtement particulier, et qui, subsidiairement, peuvent également être munis d'une couche anti-éclats à base de polyuréthane.

L'invention obvie aux inconvénients cités. Elle propose une structure de vitrage feuilleté pour avion qui supprime le risque de libération ou de projection d'éclats dans le cockpit ou la cabine en cas de rupture de la feuille de verre orientée vers l'intérieur de ladite cabine, notamment sous l'effet de contraintes thermiques.

L'objet de l'invention est un vitrage feuilleté de sécurité d'avion qui comprend une feuille de verre destinée à être orientée vers l'intérieur de la cabine, et tel que :
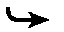 la feuille de verre est une feuille de verre trempée chimiquement,
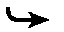 ladite feuille est revêtue sur sa face destinée à être orientée vers la cabine d'une couche de revêtement transparente anti-éclats et de protection de la feuille de verre, couche en polyuréthane thermodurci présentant une haute capacité de déformation élastique correspondant à un module d'élasticité inférieur à 200 daN/cm²,
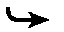 la face de ladite feuille opposée à la face revêtue par cette couche anti-éclats est au contact d'un pli ou couche en une matière plastique choisie parmi un polyvinylbutyral à taux de plastifiant élevé, compris entre 30 et 45 parts pour 100 parts de polyvinylbutyral, et un polyuréthane thermoplastique.

Le vitrage feuilleté selon l'invention utilise une couche de revêtement transparente anti-éclats en polyuréthane qui recouvre entièrement la face de la feuille de verre orientée vers la cabine.

Par éclats on entend de préférence selon l'invention des fragments de verre en forme de fines aiguilles ou esquilles, généralement très légères qui peuvent se détacher du verre à partir des lignes de rupture. Ces éclats sont différents de ceux qui se détachent de l'intercalaire lorsqu'un verre trempé thermiquement se brise sous l'effet d'un impact (impact à l'oiseau par exemple).

La feuille de verre revêtue par la couche anti-éclats est selon l'invention une feuille de verre trempée chimiquement, c'est-à-dire une feuille de verre ayant subi un traitement de renforcement chimique connu en soi. Ce traitement consiste par exemple en un échange d'ions dans les couches superficielles du verre, les ions de petites tailles étant remplacés par des ions de plus grandes tailles. Une feuille de verre trempée chimiquement présente généralement des couches en compression plus fortes mais dans des épaisseurs plus faibles que celles présentées par des feuilles de verre trempées thermiquement. Elle peut être alors plus sujette à la formation de petits éclats ou aiguilles comme définis ci-dessus en cas de rupture.

Selon l'invention, la feuille de verre revêtue par la couche anti-éclats est placée au contact, par sa face opposée à la face revêtue de la couche anti-éclats, d'un pli en une matière plastique choisie parmi un polyvinylbutyral plastifié à taux de plastifiant élevé (plastifiant usuel), compris entre 30 et 45 parts de plastifiant pour 100 parts de résine de PVB, et un polyuréthane thermoplastique. Le contact de la feuille de verre avec ce pli réalisé en PVB à taux de plastifiant élevé, procure une meilleure résistance du vitrage à une rupture notamment par clivage du verre et donc à la formation d'éclats.

Ainsi, la combinaison de la couche anti-éclats, du pli en PVB à taux de plastifiant élevé et de la feuille de verre trempée, en particulier chimiquement, prise en sandwich, offre une sécurité accrue par rapport à celle offerte par les vitrages feuilletés connus de sécurité pour avions : la résistance à la rupture notamment par clivage est plus grande et, si néanmoins cette rupture se produit, la couche anti-éclats va alors protéger l'intérieur de la cabine de pilotage de toute projection d'éclats en forme d'aiguilles.

La couche de revêtement anti-éclats est selon l'invention une couche transparente de polyuréthane présentant une haute capacité de déformation élastique, formée d'un polyuréthane présentant des liaisons de réticulation, c'est-à-dire un polyuréthane thermodurci.

La couche anti-éclats selon l'invention remplit en outre une fonction technique de protection de la surface de la feuille de verre. Cette protection se révèle particulièrement avantageuse car elle évite les rayures et autres effets néfastes dus aux attaques mécaniques ou chimiques de la surface de verre lors de manipulation du vitrage et lorsque plus tard, en utilisation, il est monté dans la baie de la cabine de pilotage, sachant que ces rayures et autres effets néfastes pourraient finalement être en partie la cause de rupture de la feuille de verre et donc de génération d'éclats.

Cette protection est avantageusement réalisée le plus tôt possible. A cette fin, elle est de préférence réalisée sur la feuille de verre avant son assemblage avec les autres éléments constitutifs du vitrage.

Cette couche de polyuréthane a dans les conditions normales de température, une haute capacité de déformation élastique, un faible module d'élasticité, inférieur à 2000 daN/cm² et de préférence inférieur à 200 daN/cm², et un allongement à la rupture de plus de 60% avec moins de 2% de déformation plastique et de préférence un allongement à la rupture de plus de 100% avec moins de 1% de déformation plastique. Les couches préférées de ce type sont des polyuréthanes thermodurcis ayant un module d'élasticité d'environ 25 à 200 daN/cm² et un allongement d'environ 100 à 200% avec moins de 1% de déformation plastique.

Ces polyuréthanes thermodurcis sont obtenus par réaction entre eux d'un composant isocyanate et d'un composant polyol, au moins un de ces composants ayant une fonctionnalité supérieure à 2.

Des exemples de monomères qui conviennent pour la préparation de ces polyuréthanes thermodurcis sont d'une part les isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,6-bis (isocyanatométhyl) benzène, le bis (4-isocyanatocyclohexyl) méthane, le bis (3-méthyl-4-isocyanatocyclohexyl) méthane, le 2,2-bis (4-isocyanatocyclohexyl) propane et le 3-isocyanatométhyl-3,5,5-triméthylcyclohexylisocyanate, ainsi que les biurets, isocyanurates et prépolymères de ces composés ayant une fonctionnalité de 3 ou davantage et d'autre part les polyols polyfonctionnels, comme les polyols ramifiés tels que les polyestherpolyols et polyétherpolyols obtenus par réaction d'alcools polyfonctionnels, notamment le 1,2,3-propanetriol (glycerol), le 2,2-bis (hydroxyméthyl) -1-propanol (triméthylotéthane), le 2,2-bis (hydroxyméthyl) - 1-butanol (triméthylolpropane), le 1,2,4-butanetriol, le 1,2,6-hexanetriol, le 2,2-bis (hydroxyméthyl) 1,3-propanediol (pentaérythritol) et le 1,2,3,4,5,6-hexanehexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane, les polycaprolactonepolyols, les polycarbonatepolyols.

Le poids moléculaire des polyols ramifiés est avantageusement d'environ 450 à 2000. Des mélanges de différents polyisocyanates et polyols monomères peuvent être utilisés. Des polyols bifonctionnels peuvent être ajoutés au mélange réactionnel.

Le composant polyol préféré est choisi parmi un polyétherpolyol d'un poids moléculaire d'environ 450, obtenu par condensation d'oxyde de 1,2-propylène avec un 2,2-bis (hydroxyméthyl)-1-butanol et ayant une teneur en groupements hydroxyles libres d'environ 10,5 à 12 % en poids, un polyesterpolyol faiblement ramifié à base de triméthylolpropane, de 1,6-hexanediol, d'acide adipique et d'acide o-et i-phtalique, ayant une teneur en radicaux OH de 3 à 5 % en poids, un lactonepolyesterpolyol trifonctionnel à base de triméthylolpropane ou de glycérol et d'ε-caprolactone ayant une teneur en groupements OH de 8 à 12% en poids environ.

Les couches en polyuréthane anti-éclats appliquées selon l'invention de façon préférée sont choisies parmi un polyuréthane aliphatique résultant de la condensation d'un biuret de 1,6-hexaméthylenédiisocyanate contenant de 21 à 24 % en poids de radicaux NCO avec un polyéther hydroxylé aliphatique ramifié résultant de la condensation d'oxyde de propylène sur du triméthylolpropane, ce polyéther contenant environ de 10,5 à 12 % en poids de radicaux OH, le rapport molaire NCO/OH étant compris, entre 0,9 et 1,1 et un polyuréthane formé à partir d'un mélange réactionnel comprenant un composant isocyanate choisi parmi les biurets ou les isocyanurates trifonctionnels de 1,6-hexaméthylènediisocyanate ayant une teneur en radicaux NCO de 15 à 25 % en poids et un composant polyol choisi parmi les polyesterpolyols de fonctionnalité supérieure à 2 ayant une teneur en radicaux OH de 3 à 12 % en poids et en ce que ce mélange réactionnel présente un rapport molaire NCO/OH de 0,9 à 1,1 et de préférence d'environ 1.

Ces couches de polyuréthane présentent une très bonne résistance à la rayure et à l'abrasion.

Dans leur application selon l'invention, à une couche de revêtement anti-éclats pour une feuille de verre d'un vitrage avion, susceptible de générer des éclats le long des lignes de rupture en cas de fragmentation, il n'est pas nécessaire que la couche présente une forte épaisseur. Pour la fonction désirée, une épaisseur de 50 µm peut déjà s'avérer suffisante. On choisit cependant de préférence une épaisseur de 100 µm à 600 µm.

Cette épaisseur peut être obtenue par une ou plusieurs pulvérisations d'un mélange réactionnel apte à former la couche directement sur la feuille de verre à revêtir, éventuellement traitée au préalable par une composition de primage et/ou par une composition de polyuréthane différente de la couche anti-éclats. La pulvérisation du mélange réactionnel peut être réalisée à l'aide d'un pistolet ou à l'aide d'un bol tournant, le mélange des composants pouvant dans ce cas être réalisé dans la tête de pulvérisation. Un dispositif à bol tournant convenable est décrit dans la publication de brevet EP-161 184, dont l'homme de métier pourra en retirer l'enseignement nécessaire.

Après pulvérisation directe sur la feuille de verre, la couche formée est polymérisée par la chaleur, par exemple par une mise du vitrage en étuve à une température de l'ordre de 80 à 140 degrés C pendant une durée de 5 minutes à 30 minutes environ.

Dans une variante, la couche anti-éclats peut se présenter sous la forme d'une feuille préfabriquée qui en plus de la couche de polyuréthane thermodurci comprend une couche, notamment une couche de polyuréthane thermoplastique, ayant des propriétés d'adhésion avec le verre. Ce peut être alors une feuille préfabriquée comme décrit par exemple dans la publication de brevet francais 2 398 606, étant entendu que la feuille préfabriquée remplit dans cette application sur vitrage avion la fonction anti-éclats et la fonction protection de la feuille de verre.

L'assemblage de la feuille préfabriquée avec la feuille de verre peut s'effectuer par calandrage ou tamponnage.

La couche anti-éclats lorsqu'elle se présente sous la forme d'une feuille peut aussi être assemblée à la feuille de verre par l'intermédiaire d'une couche adhésive qui elle-même se présente sous forme d'une feuille ou d'un film notamment en un polyuréthane.

La couche anti-éclats peut être apportée sur la feuille de verre à revêtir alors qu'elle est déjà assemblée avec les autres éléments du vitrage.

Cependant, de préférence, afin d'assurer son rôle de protection de la surface de la feuille de verre le plus tôt possible, la couche anti-éclats est apportée sur ladite feuille alors que cette dernière est sous forme monolithique avant l'assemblage.

D'autres avantages et caractéristiques de l'invention apparaîtront dans la suite de la description faite en référence aux figures :

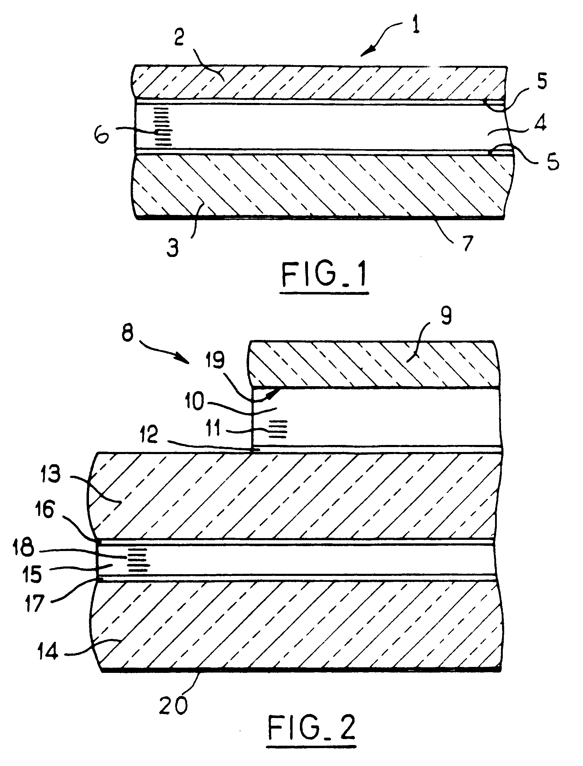

**La figure 1** représente un vitrage 1 formé de deux feuilles de verre trempées chimiquement, une feuille de verre extérieure 2 de 4 mm d'épaisseur et une feuille de verre intérieure 3 de 6 mm d'épaisseur entre lesquelles est disposé un intercalaire 4 formé de 7 plis. Les deux plis extérieurs 5 au contact des feuilles de verre présentent une épaisseur de 0,76 mm et sont formés de PVB à haut taux de plastifiant (plastifiant usuel), par exemple 37,5 parts pour 100 parts de résine de PVB. (Dans une variante, ces plis peuvent être formés de polyuréthane thermoplastique). Les 5 plis intérieurs 6 de 0,5 mm d'épaisseur chacun, sont formés de PVB à taux de plastifiant plus faible, par exemple 19,5 parts pour 100 parts de résine de PVB.

La feuille de verre intérieure 3 est revêtue de préférence le plus tôt possible avant son assemblage avec les autres éléments du vitrage, d'une couche de polyuréthane thermodurci 7, de 200 µm d'épaisseur, obtenue par pulvérisation d'un mélange réactionnel d'un composant isocyanate, à savoir un biuret de 1,6-hexaméthylènediisocyanate ayant une teneur en radicaux NCO libres de 23% en poids et d'un composant polyol, à savoir un polyétherpolyol d'un poids moléculaire de 450 obtenu par condensation d'oxyde de 1,2-propylène avec du 2,2-bis (hydroxyméthyl)-1-butanol ayant une teneur en radicaux OH libres de 1,1. Le rapport en équivalents NCO/OH du mélange est de 0,8 environ. Au composant polyol peut être ajouté du dilaurate de dibutylétain en tant que catalyseur, un ester fluoroalkylé en tant qu'agent d'étalement, un sébaçate de bis (1,2,2,6,6-pentaméthyl-4-pipéridyle) en tant qu'agent de protection contre la lumière. La couche est polymérisée à 100 degrés C pendant 20 minutes.

Avant la pulvérisation de ce mélange réactionnel sur la feuille de verre trempée chimiquement, celle-ci a subi un traitement par un primaire de type silane afin d'améliorer l'adhésion du polyuréthane avec le verre.

L'assemblage de la feuille de verre revêtue de la couche anti-éclats avec les autres éléments du vitrage feuilleté s'effectue par empilage des éléments constitutifs et il utilise ensuite un cycle d'autoclave habituel.

Lorsqu'on réalise artificiellement la fracture de la feuille de verre intérieure 3 et lorsqu'on soumet le vitrage fracturé aux différentes contraintes de pressions rencontrées au cours d'un vol usuel, a aucun moment il n'est observé un largage d'éclats de verre à partir des lignes de fracture, la couche anti-éclats remplissant parfaitement son rôle.

* Sur **la figure 2**, on a représenté en coupe une autre réalisation du vitrage selon l'invention, pouvant être utilisé comme pare-brise (ou glace frontale) pour avion. Ce vitrage 8 comprend une feuille de verre 9 semi-trempée thermiquement de 4 mm d'épaisseur, un premier intercalaire 10 formé de 9 plis 11 de 0,5 mm d'épaisseur en PVB plastifié avec 19,5 parts de plastifiant pour 100 parts de résine de PVB, et d'un pli 12 de 0,76 mm d'épaisseur en PVB plastifié avec 39 parts de plastifiant pour 100 parts de résine. Ce pli 12 est au contact d'une seconde feuille de verre 13 trempée chimiquement, de 8 mm d'épaisseur. (Un pli analogue avec un taux de plastifiant élevé peut aussi être prévu entre la feuille de verre 9 et les plis 11 de l'intercalaire). Entre cette seconde feuille de verre 13 et une troisième feuille de verre 14 qui est également trempée chimiquement, est disposé un second intercalaire 15 comprenant deux plis extérieurs 16, 17 au contact des feuilles de verre 13, 14, de 0,76 mm d'épaisseur formés de PVB plastifié avec 39 parts de plastifiant pour 100 parts de résine de PVB, et 6 plis intérieurs 18, de 0,5 mm d'épaisseur formés de PVB plastifié avec 19,5 parts de plastifiant pour 100 parts de résine de PVB. L'utilisation de plis de PVB à haut taux de plastifiant (39 parts) au contact des feuilles de verre, procure une meilleure résistance du vitrage à une rupture par clivage du verre. Dans une variante, les plis de PVB plastifié avec 39 parts peuvent être remplacés par des plis en polyuréthane thermoplastique.

La feuille de verre extérieure 9 peut comporter sur sa face intérieure une résistance chauffante par exemple sous forme d'une couche conductrice chauffante 19 connue en soi.

La feuille de verre intérieure 14 est munie sur sa face destinée à être orientée vers la cabine de l'avion, après traitement par un primaire de type silane, d'une couche de polyuréthane anti-éclats de 200 µm d'épaisseur obtenue par pulvérisation d'un mélange réactionnel d'un polyisocyanate essentiellement trifonctionnel contenant des radicaux isocyanurate à base de 1,6-hexaméthylènediisocyanate, ayant une teneur en radicaux NCO libres de 21,5 % en poids, et d'une polycaprolactone trifonctionnelle ayant une teneur en radicaux OH libres de 9,3 % en poids. Le rapport molaire NCO/OH est de 1. On ajoute au préalable comme additifs à la polycaprolactone 0,015 % en poids par rapport au poids de la polycaprolactone, de dilaurate de dibutylétain comme catalyseur de réaction, 0,1 % en poids d'un ester fluoroalkylé comme agent d'étalement et 1 % en poids de sébaçate de bis (1,2,2,6,6-pentaméthyl-4-pipéridyle) comme agent de protection contre la lumière.

La couche est polymérisée par la chaleur en étant portée à 120 degrés pendant 20 minutes.

La fabrication de la couche anti-éclats est avantageusement effectuée sur la feuille de verre, avant son assemblage avec les autres éléments constitutifs du vitrage. La couche anti-éclats peut alors assurer sa fonction de couche de protection de la surface du verre très tôt, en particulier avant toute manipulation de la feuille pour l'assemblage.

L'assemblage du vitrage utilise ensuite un cycle d'autoclave habituel.

On peut réaliser un vitrage feuilleté de sécurité analogue en utilisant une feuille de polyuréthane thermodurcissable anti-éclats fabriquée au préalable sur un support de formation adéquat, en étant associée à une couche de polyuréthane ayant des propriétés d'adhésion pour son assemblage ultérieur avec la feuille de verre 14.

L'assemblage de la feuille de polyuréthane avec la feuille de verre peut être alors réalisé par un calandrage, technique bien connue dans la fabrication des vitrages feuilletés dits asymétriques, verre-plastique.

Le vitrage selon la figure 2 peut être utilisé en tant que pare-brise ou latéral d'un avion gros porteur à cabine pressurisée. En cas de rupture de la feuille de verre intérieure 14, les éclats éventuellement générés sont maintenus sur la feuille de verre par le revêtement anti-éclats, quelques soient les conditions de pressurisation de la cabine.

## Revendications

1. Vitrage feuilleté de sécurité (1, 8) d'avion comprenant une feuille de verre (3, 14) destinée à être orientée vers l'intérieur de la cabine de l'avion, ***caractérisé en ce que*** cette feuille de verre est une feuille de verre trempée chimiquement, revêtue sur sa face destinée à être orientée vers la cabine d'une couche de revêtement transparente anti-éclats (7, 20) et de protection de la feuille de verre, en polyuréthane thermodurci présentant une haute capacité de déformation élastique correspondant à un module d'élasticité inférieur à 200 daN/cm², ***et en ce que*** la face de ladite feuille de verre (3, 14) opposée à la face revêtue par la couche anti-éclats (7, 20) est au contact d'un pli ou couche (5) en une matière plastique choisie parmi un polyvinylbutyral à taux de plastifiant compris entre 30 et 45 parts pour 100 parts de polyvinybutyral, et un polyuréthane thermoplastique.

2. Vitrage selon la revendication 1, ***caractérisé en ce que*** le polyuréthane thermodurci de la couche anti-éclats (7, 20) est formé à partir d'un composant polyol et d'un composant isocyanate, au moins un de ces composants présentant une fonctionnalité supérieure à 2.

3. Vitrage selon l'une des revendications précédentes, ***caractérisé en ce que*** le polyuréthane de la couche anti-éclats (7, 20) est choisi parmi un polyuréthane aliphatique résultant de la polycondensation d'un biuret du 1,6-hexaméthylènediisocyanate contenant de 21 à 24% en poids en radicaux NCO, avec un polyéther hydroxylé aliphatique ramifié résultant de la condensation d'oxyde de propylène sur du triméthylol propane, ce polyéther contenant environ de 10,5 à 12% en poids de radicaux hydroxyles, le rapport molaire NCO/OH étant compris entre 0,8 et 1,1, et un polyuréthane formé à partir d'un mélange réactionnel comprenant un composant isocyanate choisi parmi les biurets ou les isocyanurates trifonctionnels du 1,6-hexaméthylènediisocyanate, ayant une teneur en radicaux NCO de 15 à 25% en poids et un composant polyol choisi parmi les polyesterpolyols de fonctionnalité supérieure à 2 ayant une teneur en radicaux OH de 3 à 12% en poids, le mélange réactionnel présentant un rapport molaire NCO/OH de 0,8 à 1,1 et de préférence d'environ 1.

4. Vitrage selon l'une des revendications précédentes, ***caractérisé en ce que*** la couche anti-éclats (7, 20) présente une épaisseur comprise entre 50 µm et 600 µm, notamment entre 100 et 600 µm.

5. Vitrage selon l'une des revendications précédentes, ***caractérisé en ce que*** la couche anti-éclats (7, 20) de polyuréthane est obtenue par pulvérisation sur la feuille de verre.

6. Vitrage selon la revendication 5, ***caractérisé en ce qu*****e** la feuille de verre (3, 14) est traitée au préalable à l'aide d'une composition d'un primaire du type silane.

7. Vitrage selon l'une des revendications précédentes, ***caractérisé en c*****e *que*** la couche anti-éclats (7, 20) de polyuréthane se présente sous forme d'une feuille préfabriquée.

8. Vitrage selon l'une des revendications précédentes, ***caractérisé en ce que l***a couche anti-éclats (7, 20) de polyuréthane est associée à une couche ayant des propriétés d'adhésion avec la feuille de verre (3, 14) à revêtir.

9. Procédé pour la fabrication d'un vitrage de sécurité selon l'une des revendications précédentes, ***caractérisé en ce que*** la couche anti-éclats (7, 20) et de protection est apportée sur la feuille de verre (3, 14) avant l'assemblage de ladite feuille avec les autres éléments constitutifs du vitrage.

## Claims

1. Laminated aircraft safety glazing (1, 8) comprising a glass sheet (3, 14) to be oriented towards the inside of the aircraft cabin, characterized in that said glass sheet is a chemically tempered glass sheet, coated on its face to be oriented towards the cabin with a transparent, thermoset polyurethane, shatterproof, covering layer (7, 20) for protecting the glass sheet and having a high elastic deformation capacity corresponding to a modulus of elasticity below 200 daN/cm² and in that the face of said glass sheet (3, 14) opposite to the face coated with the shatterproof layer (7, 20) is in contact with a ply or coating (5) of a plastics material chosen from among a polyvinylbutyral with a high plasticizer level between 30 and 45 parts for 100 parts of polyvinylbutyral, and a thermoplastic polyurethane.

2. Glazing according to claim 1, characterized in that the thermoset polyurethane of the shatterproof layer (7, 20) is formed from a polyol component and an isocyanate component, at least one of these components having a functionality higher than 2.

3. Glazing according to one of the preceding claims, characterized in that the polyurethane of the shatterproof layer (7, 20) is chosen from among an aliphatic polyurethane resulting from the polycondensation of a 1,6-hexamethylene diisocyanate biuret containing 21 to 24 wt.% NCO radicals, with a branched aliphatic hydroxyl polyether resulting from the condensation of propylene oxide on trimethylol propane, said polyether containing approximately 10.5 to 12 wt.% of hydroxyl radicals, the NCO:OH molar ratio being between 0.8 and 1.1, and a polyurethane formed from a reaction mixture incorporating an isocyanate component chosen from among biurets or trifunctional isocyanurates of 1,6-hexamethylene diisocyanate, having a NCO radical content of 15 to 25 wt.%, and a polyol component chosen from among polyester polyols with a functionality higher than 2 and having an OH radical content of 3 to 12 wt.%, the reaction mixture having a NCO:OH molar ratio of 0.8 to 1.1 and preferably approximately 1.

4. Glazing according to one of the preceding claims, characterized in that the shatterproof layer (7, 20) has a thickness between 50 and 600 µm, particularly between 100 and 600 µm.

5. Glazing according to one of the preceding claims, characterized in that the polyurethane shatterproof layer (7, 20) is obtained by spraying on the glass sheet.

6. Glazing according to claim 5, characterized in that the glass sheet (3, 14) is treated beforehand with the aid of a silane-type primer composition.

7. Glazing according to one of the preceding claims, characterized in that the polyurethane shatterproof layer (7, 20) is in the form of a prefabricated sheet.

8. Glazing according to one of the preceding claims, characterized in that the polyurethane shatterproof layer (7, 20) is associated with a layer having adhesive properties with the glass sheet (3, 14) to be coated.

9. Process for the production of a safety glazing according to one of the preceding claims, characterized in that the protective, shatterproof layer (7, 20) is applied to the glass sheet (3, 14) prior to the assembly of said sheet with the other constituent elements of the glazing.

## Patentansprüche

1. Sicherheitsverglasung (1, 8) für Flugzeuge, die eine zum Inneren der Flugzeugkabine zeigende Glasscheibe (3, 14) umfaßt, **dadurch gekennzeichnet, daß** diese Glasscheibe eine chemisch vorgespannte Glasscheibe ist, die auf ihrer zur Kabine zeigenden Seite mit einer vor Splittern und die Glasscheibe schützenden transparenten Beschichtung (7, 20) aus einem durch Wärme ausgehärteten Polyurethan überzogen ist, welches ein hohes elastisches Verformungsvermögen besitzt, das einem Elastizitätsmodul von weniger als 2 kN/cm² entspricht, **und daß** sich die Seite der Glasscheibe (3, 14), welche der mit der Splitterschutzbeschichtung (7, 20) überzogenen Seite gegenüberliegt, mit einer Folie oder Schicht (5) aus einem Kunststoff im Kontakt befindet, der aus einem Polyvinylbutyral mit einem Weichmacheranteil von 30 bis 45 Teilen auf 100 Polvvinylbutyral-Teile und einem thermoplastischen Polyurethan ausgewählt ist.

2. Verglasung nach Anspruch 1, **dadurch gekennzeichnet, daß** das durch Wärme ausgehärtete Polyurethan der Splitterschutzbeschichtung (7, 20) aus einer Polyol- und einer Isocyanatkomponente gebildet ist, wobei mindestens eine der Komponenten eine Funktionalität von größer als 2 aufweist.

3. Verglasung nach einem der vorhergehenden Ansprüche, **dadurch gekennzeichnet, daß** das Polyurethan der Splitterschutzbeschichtung (7, 20) aus einem aliphatischen Polyurethan, das aus der Polykondensation eines Biurets des 1,6-Hexamethylendiisocyanates, das 21 bis 24 Gew.-% NCO-Gruppen enthält, mit einem hydroxylierten verzweigten aliphatischen Polyether resultiert, der durch Kondensation von Propylenoxid mit Trimethylolpropan erhalten worden ist, wobei dieser Polyether etwa 10,5 bis 12 Gew.-% Hydroxylgruppen enthält und das Molverhältnis von NCO/OH 0,8 bis 1,1 beträgt, und einem Polyurethan ausgewählt ist, das aus einem Reaktionsgemisch gebildet worden ist, das eine Isocyanatkomponente, die aus den Biureten oder trifunktionellen Isocyanuraten des 1,6-Hexamethylendiisocyanates mit einem Anteil an NCO-Gruppen von 15 bis 25 Gew.-% ausgewählt ist, und eine Polyolkomponente, die aus den Polyesterpolyolen mit einer Funktionalität von größer als 2 und einem Anteil an OH-Gruppen von 3 bis 12 Gew.-% ausgewählt ist, umfaßt, wobei das Reaktionsgemisch ein Molverhältnis von NCO/OH von 0,8 bis 1,1 und vorzugsweise von etwa 1 aufweist.

4. Verglasung nach einem der vorhergehenden Ansprüche, **dadurch gekennzeichnet, daß** die Dicke der Splitterschutzbeschichtung (7, 20) 50 bis 600 µm und insbesondere 100 bis 600 µm beträgt.

5. Verglasung nach einem der vorhergehenden Ansprüche, **dadurch gekennzeichnet, daß** die Splitterschutzbeschichtung (7, 20) aus Polyurethan durch Aufsprühen auf die Glasscheibe erhalten wird.

6. Verglasung nach Anspruch 5, dadurch gekennzeichnet, daS die Glasscheibe (3, 14) zuvor mit einer Zusammensetzung mit einem Haftmittel vom Typ eines Silans behandelt wird.

7. Verglasung nach einem der vorhergehenden Ansprüche, **dadurch gekennzeichnet, daß** die Splitterschutzbeschichtung (7, 20) aus Polyurethan in Form einer vorgefertigten Folie vorliegt.

8. Verglasung nach einem der vorhergehenden Ansprüche, **dadurch gekennzeichnet, daß** die Splitterschutzbeschichtung (7, 20) aus Polyurethan mit einer Schicht verbunden ist, die mit der zu überziehenden Glasscheibe (3, 14) Hafteigenschaften besitzt.

9. Verfahren zur Herstellung einer Sicherheitsverglasung nach einem der vorhergehenden Ansprüche, **dadurch gekennzeichnet,** **daß** die Beschichtung (7, 20), welche vor Splittern und die Glasscheibe (3, 14) schützen soll, auf diese vor ihrem Zusammenbau mit den anderen Bestandteilen der Verglasung aufgebracht wird.
